# EUROPÄISCHE PATENTSCHRIFT

(11) **EP 3 568 257 B1**
(45) Veröffentlichungstag und Bekanntmachung des Hinweises auf die Patenterteilung: **06.05.2026**
(21) Anmeldenummer: 17808042.0
(22) Anmeldetag: 21.11.2017
(51) Int. Cl.: B23K 11/11, B23K 11/20, B23K 11/34, F16B 17/00

(54) **BAUTEILVERBUND VON MINDESTENS ZWEI BAUTEILEN UND EIN VERFAHREN ZUR HERSTELLLUNG EINES FORM- UND/ODER KRAFTSCHLÜSSIG GEFÜGTEN BAUTEILVERBUNDES**
COMPONENT COMBINATION OF AT LEAST TWO COMPONENTS AND A METHOD FOR PRODUCING A COMPONENT COMBINATION JOINED IN A FORM-FITTING AND/OR FORCE-FITTING MANNER
ENSEMBLE DE PIÈCES COMPRENANT AU MOINS DEUX PIÈCES ET PROCÉDÉ DE PRODUCTION D'UN ENSEMBLE DE PIÈCES ASSEMBLÉES PAR COMPLÉMENTARITÉ DE FORME ET/OU À FORCE

(30) Priorität: 16.01.2017 DE 102017200589
(43) Veröffentlichungstag der Anmeldung: 20.11.2019
(73) Patentinhaber: Bayerische Motoren Werke Aktiengesellschaft, 80809 München (DE)
(72) Erfinder: GLÜCK, Bernhard, 82256 Fürstenfeldbruck (DE); KIRSCHNER, Robert, 82140 Olching (DE); MEINHARDT, Josef, 80939 München (DE); SCHWEIGHART, Franz-Xaver, 94527 Aholming (DE)
(86) Internationale Anmeldenummer: PCT/EP2017/079873
(87) Internationale Veröffentlichungsnummer: WO 2018/130329

(56) Entgegenhaltungen:
- EP-A1- 0 390 685
- WO-A1-91/11625
- CN-A- 1 268 211
- DE-A1- 3 640 484
- DE-B3- 102012 203 878
- DE-C2- 19 730 907
- US-A- 2 995 821
- US-A1- 2011 097 142

## Beschreibung

Die Erfindung betrifft einen Bauteilverbund von mindestens zwei Bauteilen und ein Verfahren zur Herstellung eines form- und/oder kraftschlüssig gefügten Bauteilverbundes.

Mit dem zunehmenden Einsatz von Leichtbauwerkstoffen im Fahrzeugbau, wie z.B. Leichtmetallen (z.B. Aluminium, Magnesium und ihre Legierungen) oder Faserverbundkunststoffen, müssen immer häufiger Bauteile aus unterschiedlichen Materialien miteinander zu einem Bauteilverbund gefügt werden. Dies ist aufgrund der verschiedenen Materialeigenschaften problematisch und führt viele etablierte Fügeprozesse an ihre Grenzen.

Für das Fügen von Alumiunium- mit Stahlbauteilen ist es aus dem Stand der Technik bekannt, Fügehilfsteile zu verwenden, die in der Art einer Niet in ein erstes Bauteil eingebracht werden und mit dem Material des zweiten Bauteils verschweißbar sind. Der Bauteilverbund wird dann hergestellt, in dem das zweite Bauteil mit dem Fügehilfselement mittels Widerstandspunktschweißen gefügt wird. Beispielhaft wird hierzu auf die Patentschrift DE 100 15 713 A1 und US 2011/0097142 A1 verwiesen. Nachteilig ist hieran, dass der Bauteilverbund für den Schweißprozess beidseitig zugänglich sein muss.

Weiterhin ist es bekannt, einen Bauteilverbund durch kraft- oder formschlüssige Verbindungen, wie z.B. Verschrauben, Vernieten, Clipsen etc., herzustellen. So zeigt die Druckschrift EP 0 390 685 A1 eine Bauteilverbindung, bei der zwei Bauteile durch Durchgangsöffnungen hindurch mittels eines Nietelements vernietet sind. Die Druckschrift DE 36 40 484 A1 offenbart ein Verfahren zur Herstellung einer Bauteilverbindung, bei dem zwei dünnwandige Bauteile durch Verpressen eines Scherstifts bzw. Niets miteinander verbunden werden. Druckschrift US 2 995 821 A zeigt eine weitere Nietverbindung. Je nach Material der miteinander zu verbindenden Bauteile sind auch diese Verfahren nur beschränkt einsetzbar und erzielen nicht die erforderlichen Festigkeiten.

Die Druckschrift DE 10 2012 203 878 B3 zeigt eine Bauteilverbindung von einem ersten und zweiten Bauteil. Im ersten Bauteil ist ein erstes männliches Fixierelement angeordnet, dass in eine als weibliches Fixierelement ausgebildete Öffnung im zweiten Bauteil eingreift.

Die Druckschrift WO 91/11625 A1 zeigt ein Verfahren zum Zusammenfügen von Materialien unter Verwendung einer Nietvorrichtung der Art, die einen Stopfen und eine Hülse umfasst. Die Hülse ist an ihrer Außenfläche mit einer umlaufenden Ausnehmung, insbesondere einer Nut, zur Bildung einer Faltzone versehen, während der Stopfen einen Kopf aufweist, der das Rohrende verformen kann. Beim Nieten schützt die umlaufende Aussparung der Hülse den Ansatzpunkt der Senkung der Materialien vor Spannungen und durch das Falten der Hülse ergibt sich eine große Auflagefläche in perfektem Kontakt mit den Materialien.

CN 1 268 211 A zeigt einen Bauteilverbund, bei dem ein Fügehilfselement in ein Aluminiumbauteil eingesetzt und mittels Schraubverbindung mit einem weiteren Bauteil verbunden wird.

Vor diesem Hintergrund ist es die Aufgabe der vorliegenden Erfindung eine Möglichkeit zur Herstellung eines Bauteilverbunds anzugeben, die für vielfältige Materialkombinationen einsetzbar ist und gegenüber dem Stand der Technik verbessert ist oder zumindest einen Vorteil aufweist.

Gelöst wird die Aufgabe durch einen Bauteilverbund nach Patentanspruch 1, und ein Verfahren nach Patentanspruch9. Weitere vorteilhafte Ausgestaltungen ergeben sich aus den Unteransprüchen und der nachfolgenden Beschreibung.

Es wird ein Bauteilverbund von einem ersten Bauteil und mindestens einem zweiten Bauteil angegeben, die an mindestens einer Fügestelle gefügt sind. An der Fügestelle ist ein erstes Fügehilfselement mit einem Halteabschnitt in ein Durchgangsloch im ersten Bauteil eingepresst und bei dem zweiten Bauteil ist an der Fügestelle ein Befestigungsaufnahmeabschnitt ausgebildet. Das erste Fügehilfselement weist weiterhin einen Befestigungsabschnitt auf, der form- und/oder kraftschlüssig in den Befestigungsaufnahmeabschnitt des zweiten Bauteils eingreift.

Die vorgeschlagene Ausgestaltung des Bauteilverbundes ermöglicht größtmögliche Flexibilität hinsichtlich der Materialien der zu verbindenden Bauteile. Die Fügehilfselemente können hinsichtlich des Materials und der Form ihres Befestigungsabschnitt bzw. Befestigungsaufnahmeabschnitt weitgehend unabhängig vom Material der Bauteile aufeinander abgestimmt werden. Das Einpressen der Fügehilfselemente kann unabhängig vom eigentlichen Fügevorgang der Bauteile erfolgen. Für das Fügen der Bauteile kann dann eine nur noch einseitige Zugänglichkeit ausreichend sein.

In einer nicht beanspruchten Ausgestaltung kann der Befestigungsaufnahmeabschnitt im Grundmaterial des zweiten Bauteils ausgebildet sein. Erfindungsgemäß ist der Befestigungsaufnahmeabschnitt Teil eines zweiten Fügehilfselements, das an der Fügestelle mit einem Halteabschnitt in ein Durchgangsloch im zweiten Bauteil eingepresst ist.

Das Durchgangsloch kann z.B. durch Schneiden oder Stanzen ausgebildet sein und weist vorzugsweise eine geschlossene Loch- bzw. Schnittkontur auf. Zu den Bauteiloberflächen ist das Durchgangsloch jeweils durch einen Randbereich begrenzt. Das Fügehilfselement ist mit dem ersten Bauteil form- und/oder kraftschlüssig quer zur Fügeachse verbunden. Die Lochgeometrie des Durchgangslochs und die Außengeometrie des Fügehilfselements sind zumindest teilweise entsprechend aufeinander abgestimmt.

Erfindungsgemäß weist wenigstens ein Randbereich der Lochwandung des Durchgangslochs im ersten Bauteil oder im zweiten Bauteil oder im ersten und zweiten Bauteil eine umlaufende Einprägung auf, in die der Halteabschnitt des Fügehilfselements eingreift und vorzugsweise eingepresst ist. Im Bereich der Einprägung ist der Lochquerschnitt vergrößert, z.B. ist der Durchmesser des Durchgangslochs im Bereich der Fase vergrößert. Der eingepresste Halteabschnitt des Fügehilfselements bildet im Bereich der Einprägung einen Hinterschnitt aus, der das Fügehilfselement in eine Richtung formschlüssig gegen ein Durchdrücken durch das Durchgangsloch sichert. Entgegen der Vermutung, dass sich die im Bereich der Einprägung reduzierte Bauteildicke nachteilig auf die Festigkeit der Verbindung auswirkt, hat sich gezeigt, dass überraschend hohe Festigkeiten erzielbar sind. Als Ursache wird hier vermutet, dass dies auf den Vorgang des Einprägens zurückzuführen ist, wodurch eine Werkstoffverfestigung im Randbereich der Einprägung erzielt wird, die im Zusammenspiel mit dem nachfolgenden Einpressen des Halteelements noch gesteigert wird. Weiterhin wurde festgestellt, dass durch das Einbringen der Einprägung auch eine Reduzierung der Wasserstoffversprödung stattfindet und einer Kantenrissempfindlichkeit in diesem Bereich entgegengewirkt werden kann.

Die Einprägung kann einseitig ausgebildet sein. Die Einprägung kann sich z.B. über bis zu 20% der Tiefe des Durchgangslochs erstrecken, um bis zu 40 % oder bis zur halben Tiefe des Durchgangslochs. Es kann auch vorteilhaft sein, wenn sich die Einprägung um mehr als 50% und insbesondere um mehr als 60% der Tiefe des Durchgangslochs erstreckt.

Als besonders vorteilhaft hat es sich herausgestellt, wenn in einer Ausgestaltung die Einprägung als umlaufende Fase ausgestaltet ist. Im Bereich der Fase ist die Lochwandung gegenüber der Längsachse des Durchgangslochs geneigt und der Durchmesser des Durchgangslochs vergrößert sich im Bereich der Fase zum Rand des Durchgangslochs hin kontinuierlich. Im Bereich der Fase kann die Lochwandung z.B. um einen Winkel gegenüber der Längsachse des Durchgangslochs geneigt sein, der in einem Bereich von 30 bis 60 Grad oder in einem Bereich von 40 bis 50 Grad liegt und insbesondere 45 Grad betragen kann.

Erfindungsgemäß wird dieser Effekt auf beiden Seiten des Bauteils bzw. der Bauteile genutzt, wozu an beiden Randbereichen der Lochwandung eine umlaufende Einprägung oder Fase eingeprägt ist, in die der Halteabschnitt des Fügehilfselements eingreift. Die Einprägungen oder Fasen können symmetrisch ausgebildet sein, so dass auf beiden Seiten des Durchgangslochs identische Einprägungen oder Fasen geprägt werden, oder asymmetrisch ausgebildet sein, d.h. mit unterschiedlichem Formen oder Winkeln und/oder über eine unterschiedliche Tiefe.

Das Durchgangsloch und/oder die Einprägung können z.B. einen kreisförmigen Querschnitt oder alternative Querschnitte aufweisen. So kann die Einbringung eines Klebstoffs erleichtert sein, wenn der Loch- und/oder Einprägungsquerschnitt z.B. eine gezackte oder mehreckige Form aufweisen, oder das Durchgangsloch mit Einprägung kronenförmig ausgestaltet ist.

Als Halteabschnitt des Fügehilfselements wird derjenige Abschnitt des Fügehilfselements bezeichnet, der im Belastungsfall eine Kraft auf das Bauteil übertragen kann. Vorteilhafter Weise kann die Dicke des Halteabschnitts im eingepressten Zustand geringer als oder im Wesentlichen gleich der Dicke des Bauteils sein. Die Formulierung "im Wesentlichen gleich" ist in diesem Zusammenhang so zu verstehen, dass die Dicke des Halteelements nach dem Einpressen gleich der Dicke des Bauteils oder fertigungsbedingt z.B. wenige Zehntel Millimeter dicker sein kann als die Bauteildicke. Das Durchgangsloch mit Einprägung bzw. eingeprägter Fase bietet die Möglichkeit, das Halteelement form- und kraftschlüssig in Richtung der Fügeachse im Bauteil zu fixieren, so dass der Halteabschnitt beispielsweise kopflos, d.h. ohne seitlich über den Durchmesser des Durchgangslochs hinauskragenden Abschnitt, ausgebildet sein kann. Vorteilhafterweise kann der Halteabschnitt eine einfach herzustellende Geometrie aufweisen und z.B. zylinderförmig ausgebildet sein.

**In** einer Ausgestaltung ist der Halteabschnitt des ersten Fügehilfselements, der Halteabschnitt des zweiten Fügehilfselements oder beide Halteabschnitte vollständig in dem Durchgangsloch aufgenommen, d.h. eine Kraftübertragung zwischen jeweiligem Bauteil und Halteabschnitt erfolgt ausschließlich an der Lochwandung des Durchgangslochs. Hierzu kann der Halteabschnitt z.B. bündig mit den Bauteiloberflächen enden oder gegenüber diesen in das Durchgangsloch hinein zurückversetzt sein.

Darüber hinaus kann bei dem Einpressen des Fügehilfselements in das Bauteil zusätzlich ein Zwischenschichtelement, z.B. eine Folie zur Verhinderung von Kontaktkorrosion oder eine Klebeschicht, zwischen den Halteabschnitt und die Lochwandung eingebracht werden.

Das Fügehilfselement kann mit dem Zwischenschichtelement und/oder dem Bauteil, in das es eingepresst ist, zusätzlich stoffschlüssig verbunden sein.

Die kraft- bzw. formschlüssige Verbindung zwischen den Bauteilen erfolgt indirekt über den Befestigungsabschnitt und den Befestigungsaufnahmeabschnitt, die miteinander im Eingriff stehen. **In** einer Ausgestaltung wirken der Befestigungsabschnitt des ersten Fügehilfselements und der Befestigungsaufnahmeabschnitt des zweiten Fügehilfselements als Verbindungspartner in der Art einer Clipsverbindung zusammen. Beim Zusammenführen einer Clipsverbindung wird üblicherweise einer der beiden Verbindungspartner oder beide elastisch verformt, damit die Verbindungspartner sich aneinander vorbeibewegen und dann formschlüssig ineinander einrasten können. Eine solche Verbindung ist sehr stabil und kann dennoch lösbar gestaltet sein. Vorteilhafter Weise erfordert das Fügen einer Clipsverbindung keine speziellen Werkzeuge, sondern kann z.B. durch eine die Bauteile zusammenführende Bewegung realisiert werden.

**In** einer alternativen Ausgestaltung ist der Befestigungsabschnitt des ersten Fügehilfselements unlösbar in den Befestigungsaufnahmeabschnitt des zweiten Fügehilfselements eingepresst. Unter dem Begriff "unlösbar" wird dabei verstanden, dass die Bauteilverbindung nur durch Zerstörung oder Beschädigung der Fügehilfselemente oder Bauteile trennbar ist. Das Einpressen des Befestigungsabschnitts kann z.B. mit einem geeigneten Presswerkzeug in der Art einer Vernietung erfolgen. Hierzu kann der Befestigungsabschnitt z.B. als stiftförmiges Element oder Stauchrohr ausgebildet sein und der Befestigungsaufnahmeabschnitt z.B. als Aussparung mit Hinterschneidung. Es ist möglich, dass zusätzlich eine Verklebung o.ä. vorgesehen ist. Befestigungsabschnitt und Befestigungsaufnahmeabschnitt können z.B. bereits vor dem Einpressvorgang ausgebildet sein oder auch während des Einpressens durch ein entsprechend geformtes Presswerkzeug gebildet werden.

Die Bauteile können vorzugsweise aus einem Blechmaterial, wie z.B. einem Stahlblech, Aluminium- oder Magnesiumblech, oder einem blechähnlichen Material ausgebildet sein, wie z.B. faserverstärktem Kunststoff, z.B. kohlenstofff-, glasfaser- oder aramidfaserverstärkt, oder es kann sich um ein Organoblech handeln. Grundsätzlich kann es sich auch um ein Gußteil oder Profilteil handeln, das an der Fügestelle blechähnlich ausgebildet ist. Die voranstehend beschriebene Bauteilverbindung eignet sich z.B. besonders für Materialstärken im Bereich von 0,5 mm bis 5 mm und insbesondere auch für Dünnbleche bzw. Feinbleche mit einer Stärke von 2,99 mm oder weniger.

In einer vorteilhaften Ausgestaltung sind das erste und/oder zweite Bauteil aus einem Leichtbauwerkstoff, wie z.B. Aluminium(-legierung) oder Faserverbundkunststoff, ausgebildet und die Fügehilfselemente sind aus Stahl ausgebildet.

Die Bauteile sind erfindungsgemäß Teil einer Fahrzeugkarosserie. Bevorzugt handelt es sich bei dem Bauteilverbund um ein Zusammenbauteil (Sandwichbauteil). Es kann sich jedoch z.B. auch um ein Fahrwerksbauteil oder ein Interieurbauteil handeln.

Der Bauteilverbund kann eine einzige Fügestelle aufweisen, vorzugsweise sind die Bauteile jedoch an mehreren Fügestellen miteinander verbunden. Die mehreren Fügestellen können identisch ausgebildet sein oder auch unterschiedlich.

Der Bauteilverbund kann weiterhin ein drittes oder weitere Bauteile aufweisen, welche ebenfalls mit Hilfe des beschriebenen Verfahrens oder mittels anderer bekannter Fügeverfahren verbunden sind.

Weiterhin wird ein Verfahren zur Herstellung eines Bauteilverbundes von mindestens zwei Bauteilen angegeben, die an mindestens einer Fügestelle gefügt sind. Das Verfahren umfasst die Schritte in der folgenden Reihenfolge:
- Erzeugen eines Durchgangslochs an wenigstens einer Fügestelle in einem ersten Bauteil,
- Einpressen eines ersten Fügehilfselements in das Durchgangsloch im ersten Bauteil so, dass ein Halteabschnitt des ersten Fügehilfselements kraft- und/oder formschlüssig mit der Lochwandung verbunden ist, wobei das Fügehilfselement weiterhin einen Befestigungsabschnitt aufweist,
- Einbringen eines Befestigungsaufnahmeabschnitts in wenigstens eine Fügestelle in einem zweiten Bauteil,
- Positionieren und Ausrichten des ersten Bauteils relativ zum zweiten Bauteil, und
- Zusammenführen von Befestigungsabschnitt und Befestigungsaufnahmeabschnitt, so dass diese kraft- und/oder formschlüssig ineinandergreifen.

Der Befestigungsaufnahmeabschnitt kann in einer nicht beanspruchten Ausgestaltung direkt im Grundmaterial des zweiten Bauteils ausgebildet werden, z.B. durch Erzeugen einer Aussparung o.ä.

Erfindungsgemäß umfasst das Einbringen des Befestigungsaufnahmeabschnitts in das zweite Bauteil die weiteren Schritte:
- Erzeugen eines Durchgangslochs an wenigstens einer Fügestelle in dem zweiten Bauteil,
- Einpressen eines zweiten Fügehilfselements in das Durchgangsloch im zweiten Bauteil so, dass ein Halteabschnitt des zweiten Fügehilfselements kraft- und/oder formschlüssig mit der Lochwandung verbunden ist, wobei das zweite Fügehilfselement weiterhin den Befestigungsaufnahmeabschnitt aufweist.

Das Durchgangsloch kann z.B. durch Stanzen oder Schneiden ausgebildet werden. Handelt es sich um ein Bauteil aus Faserverbundkunststoff (FVK) so kann das Durchgangsloch auch bereits bei der Bauteilherstellung, z.B. beim Verpressen des Bauteilhalbzeugs, ausgebildet werden.

Erfindungsgemäß wird in einem Randbereich des Durchgangslochs im ersten Bauteil, im zweiten Bauteil oder in beiden Bauteilen eine Einprägung oder Fase aufgeprägt. Das Prägen kann z.B. mittels eines entsprechend geformten Prägewerkzeugs erfolgen. Dies kann zeitgleich mit dem Erzeugen des Durchgangslochs oder in einem separaten Fertigungsschritt erfolgen, z.B. vor oder nach dem Erzeugen des Durchgangslochs. Bei einem FVK-Bauteil kann die Einprägung beispielsweise bereits bei der Herstellung des FVK-Bauteils, z.B. beim Verpressen des Bauteilhalbzeugs, ausgebildet werden. Auch eine solche Einprägung erzielt die beschriebene Verfestigung aufgrund eines erhöhten Faservolumenanteils im Randbereich des Durchgangslochs.

Wird das Durchgangsloch in einem Metallbauteil ausgebildet, so kann es in einer Ausgestaltung vorteilhaft sein, wenn das Einprägen der Einprägung bzw. Fase vor dem Ausbilden des Durchgangslochs erfolgt. Das Einprägen der Einprägung bzw. Fase erzeugt eine Einkerbung im Metallbauteil, wobei eine eventuell vorhandene Bauteilbeschichtung oder Oxidschicht an den Kerbflächen zumindest teilweise erhalten bleibt.

Darüber hinaus kann bei dem Einpressen des Fügehilfselements in das Bauteil zusätzlich eine Schutzschicht, z.B. eine Folie zur Verhinderung von Kontaktkorrosion, zwischen das Fügehilfselement und die Lochwandung eingebracht werden.

Mit dem Verfahren können die Bauteile in der Art einer Vorfixierung verbunden sein und anschließend durch weitere Fügeverfahren zusätzlich miteinander verbunden werden. Ebenso ist es möglich, dass der Bauteilverbund nur durch das voranstehend beschriebene Verfahren ausgebildet wird, wobei die Bauteile vorzugsweise an mehreren Fügestellen verbunden werden.

Wird zwischen dem Fügehilfselement und dem Bauteil zusätzlich eine weitere Schicht eingebracht (z.B. zur elektrochemischen Trennung oder eine Klebeschicht) so kann durch das Verpressen und/oder eine Wärmebehandlung zusätzlich eine stoffschlüssige Verbindung erreicht werden. Die Wärmebehandlung kann vor, während oder nach dem Einpressvorgang erfolgen.

Das Einpressen des Fügehilfselements erfolgt z.B. mit einem geeigneten Werkzeug, z.B. einem Presswerkzeug oder C-Bügel. Hierzu wird der Halteabschnitt in das entsprechende Durchgangsloch eingeführt und dort verpresst, wobei das Material des Halteabschnitts dauerhaft verformt wird und an die Lochwandung kraftschlüssig angepresst wird. Weiterhin kann in einer Ausgestaltung vorgesehen sein, dass zudem das Material des Halteabschnitts in den eingeprägten bzw. angefasten Bereich fließt und dort jeweils einen Hinterschnitt ausbildet. Das Fügehilfselement ist somit auch in Richtung der Fügeachse F formschlüssig im Bauteil fixiert.

In einer nicht beanspruchten Ausgestaltung wird das Durchgangsloch und/oder die Einprägung nicht in einem separaten Schritt, sondern durch das Einbringen des Fügehilfselements selbst erzeugt. Das Durchgangsloch kann z.B. erzeugt werden, indem ein selbstfurchendes Fügehilfselement, z.B. mittels Drehschlag, in das Bauteil eingetrieben wird. Ebenso kann das Fügehilfselement durch ein vorgeformtes Element, z.B. in der Art eines Gewindebuchsens oder Helicoils, ausgebildet sein.

Wird in einer Ausgestaltung an beiden Randbereichen der Lochwandung eine umlaufende Einprägung bzw. Fase aufgeprägt, so kann diese wie für die erste Einprägung bzw. Fase beschrieben erzeugt werden. Beim Einpressen des Halteabschnitts in das Durchgangsloch bildet der Halteabschnitt dann an beiden Einprägung bzw. Fasen einen Hinterschnitt aus, der ihn im Durchgangsloch fixiert.

Das Positionieren, Ausrichten und Zusammenführen der Bauteile kann vorzugsweise automatisiert erfolgen, z.B. mit einer entsprechend programmierten Handhabungsvorrichtung.

Das Verfahren wird zur Herstellung des voranstehend beschriebenen Bauteilverbundes verwendet, so dass dieselben technischen Wirkungen und Vorteile erreicht werden, wie sie hierzu beschrieben sind.

Die Erfindung weist u.a. folgende Vorteile auf:
- Das Verfahren ermöglicht die kostengünstige und reproduzierbare Herstellung von Bauteilverbunden und Zusammenbauteilen, insbesondere in Mischbauweise.
- Der Bauteilverbund kann lösbar gestaltet werden.
- Das Fügen des Bauteilverbundes ist auch bei einseitiger Zugänglichkeit möglich.
- Der Dicke des Bauteilverbundes kann auf die Dicke der zu verbindenden Bauteile reduziert werden.
- Die Bauteilverbindung kann gegenüber bekannten Fügeverbindungen gewichtsneutral oder gewichtsvorteilig sein.
- Die erfindungsgemäße Fügeverbindung ist insbesondere für Dünnblechverbindungen geeignet.
- Ermöglicht ein einfaches Fügen von Bauteilen im Presswerk.

Die oben beschriebenen Eigenschaften, Merkmale und Vorteile dieser Erfindung sowie die Art und Weise, wie diese erreicht werden, werden klarer und deutlicher verständlich anhand der Zeichnung und im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen in schematischer Darstellung:
- Figur 1: eine Schnittansicht eines ersten beispielhaften Bauteilverbundes
- Figur 2A, 2B: eine Vorgehensweise zur Herstellung des Bauteilverbundes und
- Figur 3 bis 7: Schnittansichten weiterer beispielhafter Bauteilverbunde.

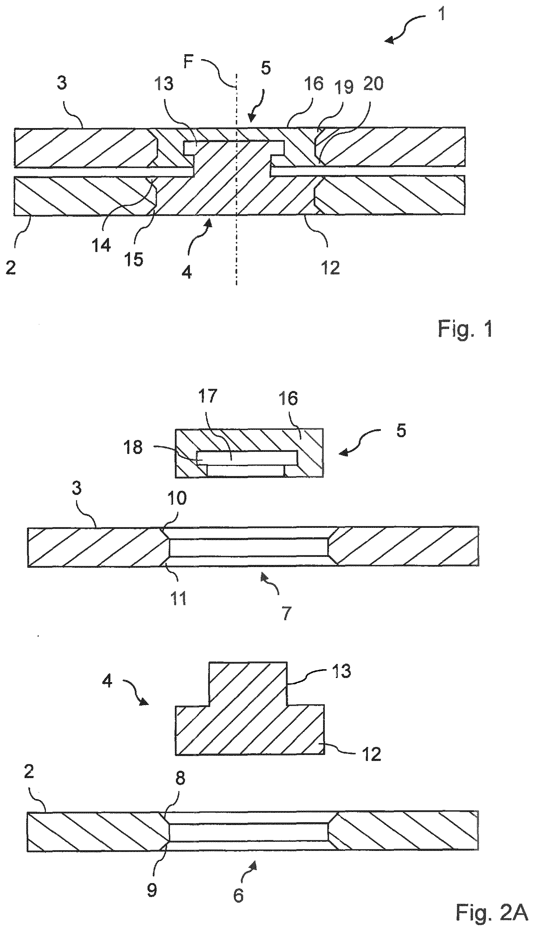

Figur 1 zeigt in einer Schnittdarstellung die Fügestelle eines Bauteilverbundes 1, der zwei Bauteile 2, 3 umfasst. Der Bauteilverbund 1 ist mit dem erfindungsgemäßen Verfahren hergestellt. Der Bauteilverbund 1 kann mehrere solche Fügestellen aufweisen, die identisch oder unterschiedlich ausgebildet sein können.

Das erste Bauteil 2 ist ein Bauteil aus einem Aluminiumblech. Der Begriff Aluminium umfasst auch die entsprechenden Aluminiumlegierungen. Das zweite Bauteil 3 ist ebenfalls aus einem Aluminiumblech ausgebildet. Die beiden Bauteile 2, 3 sind an der Fügestelle indirekt mittels eines ersten Fügehilfselements 4, das in das erste Bauteil 2 eingepresst ist, und eines zweiten Fügehilfselements 5, das in das zweite Bauteil 3 eingepresst ist, gefügt, wozu die beiden Fügehilfselemente 4 und 5 kraft- und formschlüssig miteinander verbunden sind. Das erste und zweite Fügehilfselement 4, 5 sind aus einem Stahlwerkstoff ausgebildet.

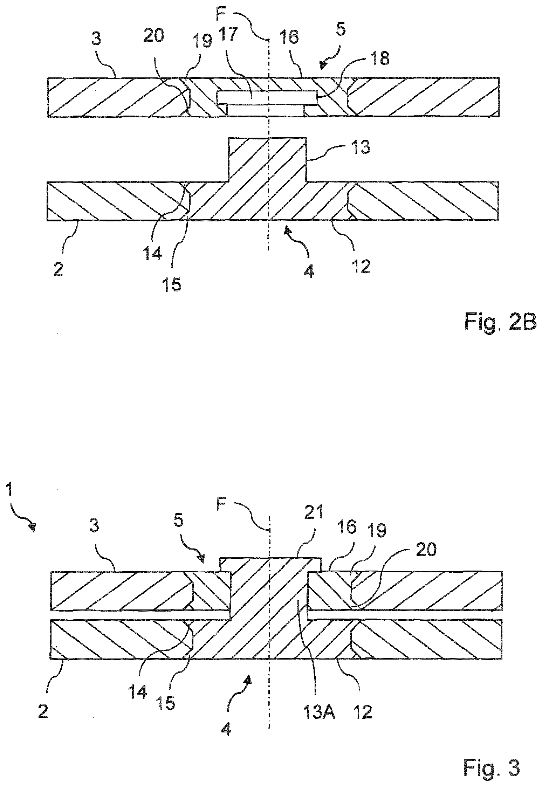

Figur 2a und 2b zeigen Schritte auf dem Weg der Herstellung.

Im ersten Bauteil 2 und zweiten Bauteil 3 wird an der Fügestelle jeweils ein Durchgangsloch 6, 7 ausgebildet. In den Randbereichen der Lochwandung ist jeweils eine umlaufende Einprägung 8, 9 bzw. 10, 11 in Form einer Fase angeprägt.

In das erste Bauteil 2 wird das erste Fügehilfselement 4 eingepresst. Das erste Fügehilfselement 4 weist einen kopffreien Halteabschnitt 12 mit einer zylindrischen Form auf und einen Befestigungsabschnitt 13. Mit dem Halteabschnitt 12 erfolgt die Fixierung im ersten Bauteil 2, der Befestigungsabschnitt 13 dient der späteren Verbindung mit dem zweiten Fügehilfselement 5 im zweiten Bauteil 3.

Der zylinderförmige Halteabschnitt 12 wird in das erste Durchgangsloch 6 eingeführt und dort mit einem geeigneten Presswerkzeug verpresst, wobei das Material des Halteabschnitts 12 dauerhaft verformt wird und an die Lochwandung kraftschlüssig angepresst wird. Zudem fließt das Material des Halteabschnitts 12 in den angefasten Bereich und bildet dort jeweils einen Hinterschnitt 14, 15 aus (s. Figur 2B). Das erste Fügehilfselement 4 ist somit auch in Richtung der Fügeachse F formschlüssig im ersten Bauteil 2 fixiert. Als zweites Fügehilfselement 5 wird beispielhaft ein zylindrischer Metallbutzen verwendet. Die Zylinderwandung bildet den Halteabschnitt 16, der Befestigungsaufnahmeabschnitt 17 ist durch eine in das Innere des Metallbutzens hineinragende Aussparung mit einem Rücksprung 18 gebildet.

Das Einpressen des zweiten Fügehilfselements 5 in das zweite Bauteil 3 erfolgt wie voranstehend für das erste Fügehilfselement 4 beschrieben. Es bilden sich ebenfalls zwei Hinterschnitte 19, 20 aus, die das zweite Fügehilfselement 5 formschlüssig in Fügerichtung F im zweiten Bauteil 3 fixieren.

Die Halteabschnitte 12 und 16 sind vollständig im ersten Bauteil 2 bzw. zweiten Bauteil 3 aufgenommen, d.h. sie stützen sich nicht auf einer Oberfläche des Bauteils, sondern lediglich an der Lochwandung im Bauteil ab. Der Befestigungsabschnitt 13 steht vom ersten Bauteil 2 hervor. Der Befestigungsabschnitt 13 sowie der Befestigungsaufnahmeabschnitt 17 können bereits vor dem Einpressen ausgebildet sein oder alternativ beim Einpressen des Fügehilfselements 4 bzw. 5 z.B. durch Verformen eines Teils des Halteabschnitts ausgebildet werden.

Zur Herstellung des Bauteilverbundes werden die Bauteile zueinander gebracht, so dass der Befestigungsabschnitt 13 und der Befestigungsaufnahmeabschnitt 17 ineinander eingreifen. Mit Bezug auf Figur 2B wird der stiftförmig ausgebildete Befestigungsabschnitt 13 in den Befestigungsaufnahmeabschnitt 17 eingepresst und plastisch verformt, wobei er an dem Rücksprung 18 einen Hinterschnitt ausbildet zur dauerhaften formschlüssigen Verbindung der Bauteile 2, 3.

Figur 3 zeigt eine alternative Ausgestaltung des Bauteilverbundes 1. Der Befestigungsaufnahmeabschnitt im zweiten Fügehilfselement 5 ist als Durchgangsöffnung ausgebildet und der Befestigungsabschnitt 13A des ersten Fügehilfselement 4 ragt durch das zweite Fügehilfselement 5 hindurch. Beim Einpressen bildet der Befestigungsabschnitt 13A auf der Austrittsseite einen den Formschluss herstellenden, seitlich über die Durchgangsöffnung hinausragenden Kopfabschnitt 21.

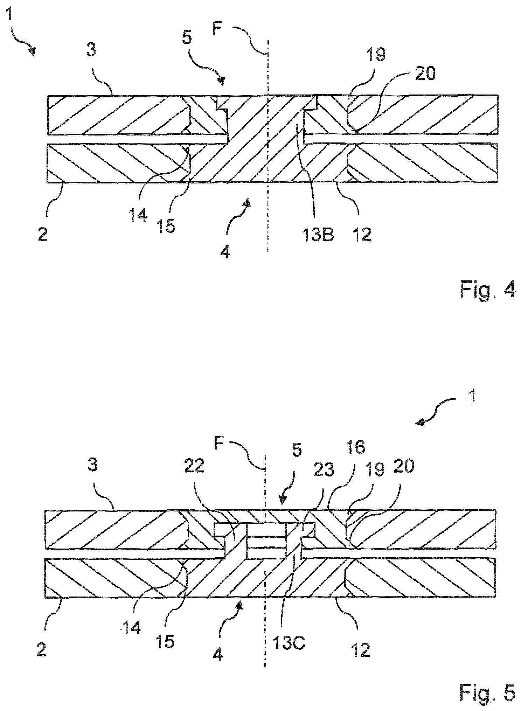

Der Bauteilverbund 1 kann in einer weiteren Ausgestaltung auch so gestaltet sein, dass der Befestigungsabschnitt 13B bündig mit dem zweiten Fügehilfselement 5 abschließt, wie in Figur 4 dargestellt.

Anstelle des in den Figuren 1 bis 4 gezeigten Befestigungsabschnitts 13, 13 A, 13B, der durch Einpressen verformt wird, kann der Bauteilverbund 1 ebenso durch eine Art Clipsverbindung hergestellt werden. Hierzu kann z.B. der Befestigungsabschnitt 13C, wie in Figur 5 gezeigt, mit zwei Armen 22, 23 ausgebildet sein, die sich beim Einführen in den Befestigungsaufnahmeabschnitt 17 zunächst elastisch verformen und in der Endlage in den Rücksprung 18 eingreifen. Eine solche Clipsverbindung hat den Vorteil, dass sie als lösbare Verbindung gestaltet sein kann. Die Clipsverbindung kann ebenso bündig mit der Bauteiloberfläche abschließen oder darüber hinausragen.

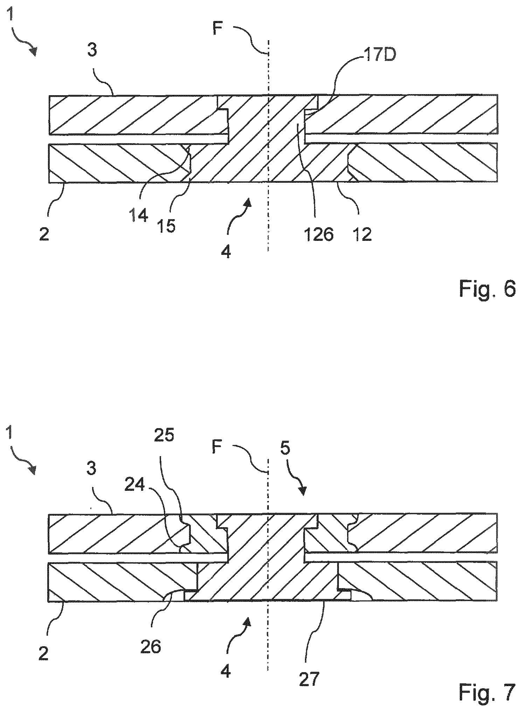

Zur Ausbildung eines nicht beanspruchten Bauteilverbunds kann der Befestigungsaufnahmeabschnitt auch direkt im Grundmaterial des zweiten Bauteils ausgebildet sein, dann kann auf das Einbringen eines zweiten Fügehilfselements verzichtet werden. Figur 6 zeigt beispielhaft einen solchen Bauteilverbund 1, bei dem im zweiten Bauteil 3 ein Befestigungsaufnahmeabschnitt 17D **In** Form eines Durchgangslochs ausgebildet ist und der Befestigungsabschnitt 13D des Fügehilfselements 4 im ersten Bauteil 2 durch das Durchgangsloch 17D hindurch ragt und form- und kraftschlüssig in dieses eingepresst ist.

Die Form der Einprägung ist nicht auf die gezeigte Fasengeometrie beschränkt, vielmehr sind Abwandlungen möglich, wie z.B. die in Figur 7 dargestellten kuppelförmigen bzw. wannenförmigen Einprägungen 24, 25 und 26, oä. Der Halteabschnitt kann durch das Einpressen in die Einprägungen fließen, wie in Figur 7 zum Bauteil 3 dargestellt, oder bereits vor dem Einpressen eine Form aufweisen, die an der Einprägung hinterschnittig anliegt, wie z.B. das in Figur 7 gezeigte Fügehilfselement 4 mit einem verbreiterten Kopfabschnitt 27 im Bereich des Halteabschnitts.

Die Bauteile 2, 3 können ebenso aus anderen Materialien, z.B. einem anderen Leichtbauwerkstoff, wie z.B. einem Faserverbundkunststoff, oder aus einem Stahlwerkstoff ausgebildet sein. Ebenso können für die Fügehilfselemente 4, 5 andere Werkstoffe verwendet werden. Der Bauteilverbund kann Bauteile gleichen Materials miteinander verbinden oder Bauteile aus unterschiedlichen Materialien. Zudem kann der Bauteilverbund mehr als die gezeigten zwei Bauteile umfassen. So können z.B. zunächst zwei Bauteile mittels eines Fügehilfselements in der Art einer Nietverbindung miteinander gefügt werden und dann der beschriebene Bauteilverbund mit einem weiteren Bauteil mit weiterem Fügehilfselement hergestellt werden. Auch können weitere Bauteile in anderer Art und Weise an den Bauteilverbund gefügt werden. Beispielsweise kann auch ein weiteres Bauteil, z.B. ein Stahlbauteil, mit dem ersten oder zweiten Fügehilfselement mittels Widerstandspunktschweißen verbunden werden.

Der gezeigte Abstand zwischen den Bauteilen ist nicht erforderlich. Im Bauteilverbund können die Bauteile auch direkt aufeinander aufliegen.

Im Gegensatz zu herkömmlichen Bauteilverbunden mit Fügehilfselementen kann eine deutlich geringere Höhe des Bauteilverbundes erreicht werden, da die Fügehilfselemente bei Bedarf bündig mit den Werkstückoberflächen abschließen können.

Ebenso kann bei dem Einpressen des Fügehilfselements in das Bauteil zusätzlich eine nicht dargestellte Schutzschicht, z.B. eine Folie zur Verhinderung von Kontaktkorrosion, zwischen das Fügehilfselement und die Lochwandung eingebracht werden.

Obwohl in den Figuren jeweils zwei symmetrische Fasen gezeigt sind, können die Fasen asymmetrisch ausgebildet sein.

In den Figuren ist aus Gründen der Veranschaulichung der Verlauf der Lochwandung so dargestellt, als ob die geneigte Lochwandung im Bereich der Fase direkt in einen senkrechten Lochwandungsabschnitt übergeht. In der Realität kann zwischen dem geneigten Wandungsabschnitt und dem senkrechtem Wandungsabschnitt jedoch ein kragenförmiges umlaufendes Plateau ausgebildet sein, das durch die Geometrie des Prägestempels bedingt ist.

Durch die angeprägte Fase im Durchgangsloch und das eingepresste Fügehilfselement werden sehr hohe Festigkeiten erreicht. Beispielsweise wurde in einem Versuch in einem Blech aus einer 5000er Aluminiumlegierung (Grundfestigkeit von 120 bis 140 N/mm²) mit einer Dicke von 2,5 mm ein Durchgangsloch mit einer Durchmesser von 12 mm im Kern ausgebildet. An den Randbereichen wurde eine Fase angeprägt unter einem Winkel von 45 Grad mit einer Prägetiefe von 0,7 mm und einer Plateaubreite von 0,4 mm. Ein zylindrischer Blechbutzen aus S355 mit einer Dicke von 4 mm und einem Durchmesser vor dem Verpressen von 11,7 mm wurde in das Durchgangsloch eingepresst. Nach dem Verpressen ergaben sich Auszugskräfte für den Butzen von 8,5 bis 12,6 kN für jede Seite.

Die Ausführungsbeispiele sind nicht maßstabsgetreu und nicht beschränkend. Abwandlungen im Rahmen der Erfindung, wie sie durch die Ansprüche definiert ist, sind möglich.

## Patentansprüche

1. Bauteilverbund, der Teil einer Fahrzeugkarosserie ist, von mindestens zwei Bauteilen (2, 3), die an mindestens einer Fügestelle gefügt sind, umfassend:
ein erstes Bauteil (2), wobei an der Fügestelle ein erstes Fügehilfselement (4) mit einem Halteabschnitt (12) in ein Durchgangsloch (6) im ersten Bauteil (2) eingepresst ist, und
ein zweites Bauteil (3), bei dem an der Fügestelle ein Befestigungsaufnahmeabschnitt (17) ausgebildet ist,
wobei das erste Fügehilfselement (4) weiterhin einen Befestigungsabschnitt (13) aufweist, der form- und/oder kraftschlüssig in den Befestigungsaufnahmeabschnitt (17) des zweiten Bauteils (3) eingreift, und
wobei der Befestigungsaufnahmeabschnitt Teil eines zweiten Fügehilfselements (5) ist, das an der Fügestelle mit einem Halteabschnitt (16) in ein Durchgangsloch (7) im zweiten Bauteil eingepresst ist,
wobei das Durchgangsloch (6, 7) im ersten Bauteil (2) und/oder im zweiten Bauteil (3) in wenigstens einem Randbereich durch eine umlaufende Einprägung (8, 9, 10, 11) erweitert ist, in die der Halteabschnitt (12) des Fügehilfselements (4, 5) eingepresst ist, und
wobei das Durchgangsloch in beiden Randbereichen durch jeweils eine Einprägung (8, 9, 10, 11) erweitert ist.

2. Bauteilverbund nach Patentanspruch 1, wobei die Einprägung (8, 9, 10, 11) als Fase ausgebildet ist.

3. Bauteilverbund nach einem der vorangehenden Patentansprüche,
bei dem der Halteabschnitt (12, 16) des ersten Fügehilfselements (4) und/oder des zweiten Fügehilfselements (5) vollständig in dem Durchgangsloch (6, 7) aufgenommen ist.

4. Bauteilverbund nach einem der vorangehenden Patentansprüche, wobei zwischen Halteabschnitt (12; 16) und dem Bauteil (2, 3), in welchen der Halteabschnitt eingepresst ist, weiterhin ein Zwischenschichtelement eingebracht ist.

5. Bauteilverbund nach einem der vorangehenden Patentansprüche, wobei
der Halteabschnitt (12; 16) mit dem Zwischenschichtelement und/oder dem Bauteil (2, 3), in welches der Halteabschnitt eingepresst ist, zusätzlich stoffschlüssig verbunden ist.

6. Bauteilverbund nach einem der vorangehenden Patentansprüche, wobei der Befestigungsabschnitt (13C) und der Befestigungsaufnahmeabschnitt (17) in der Art einer Clipsverbindung zusammenwirken.

7. Bauteilverbund nach einem der vorangehenden Patentansprüche, wobei der Befestigungsabschnitt (13) unlösbar in den Befestigungsaufnahmeabschnitt (17)) eingepresst ist.

8. Bauteilverbund nach Patentanspruch 7,
wobei
das erste und/oder zweite Bauteil (2, 3) aus einem Leichtbauwerkstoff ausgebildet sind und die Fügehilfselemente (4, 5) aus Stahl ausgebildet sind.

9. Verfahren zur Herstellung eines Bauteilverbundes (1), der Teil einer Fahrzeugkarosserie ist, von mindestens zwei Bauteilen (2, 3), die an mindestens einer Fügestelle gefügt sind, mit den folgenden Schritten in der folgenden Reihenfolge:
a) Erzeugen eines Durchgangslochs (6) an wenigstens einer Fügestelle in einem ersten Bauteil (2),
b) Einpressen eines ersten Fügehilfselements (4) in das Durchgangsloch (6) im ersten Bauteil (2) so, dass ein Halteabschnitt (12) des ersten Fügehilfselements (4) kraft- und/oder formschlüssig mit der Lochwandung verbunden ist, wobei das Fügehilfselement (4) weiterhin einen Befestigungsabschnitt (13) aufweist,
d) Einbringen eines Befestigungsaufnahmeabschnitts (17) in wenigstens eine Fügestelle in einem zweiten Bauteil (3), wobei das Erzeugen des Befestigungsaufnahmeabschitts (17) im zweiten Bauteil weiterhin die Schritte umfasst:
c1) Erzeugen eines Durchgangslochs (7) an wenigstens einer Fügestelle in dem zweiten Bauteil (3),
c2) Einpressen eines zweiten Fügehilfselements (5) in das Durchgangsloch (7) im zweiten Bauteil (3) so, dass ein Halteabschnitt (16) des zweiten Fügehilfselements (5) kraft- und/oder formschlüssig mit der Lochwandung verbunden ist, wobei das zweite Fügehilfselement (5) weiterhin den Befestigungsaufnahmeabschnitt (17) aufweist,
d) Positionieren und Ausrichten des ersten Bauteils (2) relativ zum zweiten Bauteil (3), und
e) Zusammenführen von Befestigungsabschnitt (13) und Befestigungsaufnahmeabschnitt (17), so dass diese kraft- und/oder formschlüssig ineinandergreifen,
wobei vor dem Einpressen des jeweiligen Fügehilfselements (4, 5) in dem ersten Bauteil (2) und/oder dem zweiten Bauteil (3) eine umlaufende Einprägung so erzeugt wird, dass das jeweilige Durchgangsloch (6, 7) in wenigstens einem Randbereich erweitert ist und
der Halteabschnitt (12, 16) des Fügehilfselements (4, 5) in die Einprägung eingepresst wird und nach dem Einpressen an der Einprägung (8, 9, 10, 11) einen Hinterschnitt (14, 15, 19, 20) ausbildet.

## Claims

1. Component assembly which is part of a vehicle body, of at least two components (2, 3) which are joined at at least one joining point, comprising:
a first component (2), wherein at the joining point a first auxiliary joining element (4) with a retaining portion (12) is pressed into a through-hole (6) in the first component (2), and
a second component (3), in which at the joining point a fastening receiving portion (17) is formed,
wherein the first auxiliary joining element (4) further comprises a fastening portion (13) which engages in a form-fitting and/or force-fitting manner in the fastening receiving portion (17) of the second component (3), and
wherein the fastening receiving portion is part of a second auxiliary joining element (5) which is pressed at the joining point with a retaining portion (16) into a through-hole (7) in the second component,
wherein the through-hole (6, 7) in the first component (2) and/or in the second component (3) is widened in at least one edge region by a circumferential impression (8, 9, 10, 11) into which the retaining portion (12) of the auxiliary joining element (4, 5) is pressed, and
wherein the through-hole is widened in both edge regions by one impression (8, 9, 10, 11) each.

2. Component assembly according to claim 1, wherein the impression (8, 9, 10, 11) is formed as a chamfer.

3. Component assembly according to one of the preceding claims, in which the retaining portion (12, 16) of the first auxiliary joining element (4) and/or of the second auxiliary joining element (5) is completely received in the through-hole (6, 7).

4. Component assembly according to one of the preceding claims, wherein between retaining portion (12; 16) and the component (2, 3) into which the retaining portion is pressed, an intermediate layer element is further introduced.

5. Component assembly according to one of the preceding claims, wherein the retaining portion (12; 16) is additionally connected in a materially bonded manner to the intermediate layer element and/or the component (2, 3) into which the retaining portion is pressed.

6. Component assembly according to one of the preceding claims, wherein the fastening portion (13C) and the fastening receiving portion (17) cooperate in the manner of a clip connection.

7. Component assembly according to one of the preceding claims, wherein the fastening portion (13) is pressed in a non-releasable manner into the fastening receiving portion (17).

8. Component assembly according to claim 7, wherein the first and/or second component (2, 3) are formed from a lightweight construction material and the auxiliary joining elements (4, 5) are formed from steel.

9. Method for producing a component assembly (1) which is part of a vehicle body, of at least two components (2, 3) which are joined at at least one joining point, with the following steps in the following sequence:
a) producing a through-hole (6) at at least one joining point in a first component (2),
b) pressing a first auxiliary joining element (4) into the through-hole (6) in the first component (2) such that a retaining portion (12) of the first auxiliary joining element (4) is connected in a force-fitting and/or form-fitting manner to the hole wall, wherein the auxiliary joining element (4) further comprises a fastening portion (13),
d) introducing a fastening receiving portion (17) at at least one joining point in a second component (3), wherein producing the fastening receiving portion (17) in the second component further comprises the steps:
c1) producing a through-hole (7) at at least one joining point in the second component (3),
c2) pressing a second auxiliary joining element (5) into the through-hole (7) in the second component (3) such that a retaining portion (16) of the second auxiliary joining element (5) is connected in a force-fitting and/or form-fitting manner to the hole wall, wherein the second auxiliary joining element (5) further comprises the fastening receiving portion (17),
d) positioning and aligning the first component (2) relative to the second component (3), and e) bringing together fastening portion (13) and fastening receiving portion (17) such that they engage in a force-fitting and/or form-fitting manner with one another,
wherein before pressing the respective auxiliary joining element (4, 5) into the first component (2) and/or the second component (3), a circumferential impression is produced such that the respective through-hole (6, 7) is widened in at least one edge region and the retaining portion (12, 16) of the auxiliary joining element (4, 5) is pressed into the impression and after pressing forms an undercut (14, 15, 19, 20) at the impression (8, 9, 10, 11).

## Revendications

1. Assemblage de composants qui fait partie d'une carrosserie de véhicule, d'au moins deux composants (2, 3) qui sont assemblés en au moins un point d'assemblage, comprenant :
un premier composant (2), dans lequel au point d'assemblage un premier élément auxiliaire d'assemblage (4) avec une section de retenue (12) est emmanché dans un trou traversant (6) dans le premier composant (2), et
un deuxième composant (3), dans lequel au point d'assemblage une section de réception de fixation (17) est formée,
dans lequel le premier élément auxiliaire d'assemblage (4) comprend en outre une section de fixation (13) qui s'engage de manière complémentaire et/ou par friction dans la section de réception de fixation (17) du deuxième composant (3), et
dans lequel la section de réception de fixation fait partie d'un deuxième élément auxiliaire d'assemblage (5) qui est emmanché au point d'assemblage avec une section de retenue (16) dans un trou traversant (7) dans le deuxième composant,
dans lequel le trou traversant (6, 7) dans le premier composant (2) et/ou dans le deuxième composant (3) est élargi dans au moins une région de bord par une empreinte périphérique (8, 9, 10, 11) dans laquelle la section de retenue (12) de l'élément auxiliaire d'assemblage (4, 5) est emmanchée, et
dans lequel le trou traversant est élargi dans les deux régions de bord par une empreinte (8, 9, 10, 11) chacune.

2. Assemblage de composants selon la revendication 1, dans lequel l'empreinte (8, 9, 10, 11) est formée comme un chanfrein.

3. Assemblage de composants selon l'une des revendications précédentes, dans lequel la section de retenue (12, 16) du premier élément auxiliaire d'assemblage (4) et/ou du deuxième élément auxiliaire d'assemblage (5) est complètement reçue dans le trou traversant (6, 7).

4. Assemblage de composants selon l'une des revendications précédentes, dans lequel entre la section de retenue (12; 16) et le composant (2, 3) dans lequel la section de retenue est emmanchée, un élément de couche intermédiaire est en outre introduit.

5. Assemblage de composants selon l'une des revendications précédentes, dans lequel la section de retenue (12; 16) est en outre reliée de manière solidaire à l'élément de couche intermédiaire et/ou au composant (2, 3) dans lequel la section de retenue est emmanchée.

6. Assemblage de composants selon l'une des revendications précédentes, dans lequel la section de fixation (13C) et la section de réception de fixation (17) coopèrent à la manière d'une liaison à clip.

7. Assemblage de composants selon l'une des revendications précédentes, dans lequel la section de fixation (13) est emmanchée de manière non démontable dans la section de réception de fixation (17).

8. Assemblage de composants selon la revendication 7, dans lequel le premier et/ou le deuxième composant (2, 3) sont formés d'un matériau de construction légère et les éléments auxiliaires d'assemblage (4, 5) sont formés d'acier.

9. Procédé de fabrication d'un assemblage de composants (1) qui fait partie d'une carrosserie de véhicule, d'au moins deux composants (2, 3) qui sont assemblés en au moins un point d'assemblage, avec les étapes suivantes dans l'ordre suivant :
a) production d'un trou traversant (6) en au moins un point d'assemblage dans un premier composant (2),
b) emmanchement d'un premier élément auxiliaire d'assemblage (4) dans le trou traversant (6) dans le premier composant (2) de sorte qu'une section de retenue (12) du premier élément auxiliaire d'assemblage (4) est reliée de manière par friction et/ou complémentaire à la paroi du trou, dans lequel l'élément auxiliaire d'assemblage (4) comprend en outre une section de fixation (13),
d) introduction d'une section de réception de fixation (17) en au moins un point d'assemblage dans un deuxième composant (3), dans lequel la production de la section de réception de fixation (17) dans le deuxième composant comprend en outre les étapes :
c1) production d'un trou traversant (7) en au moins un point d'assemblage dans le deuxième composant (3),
c2) emmanchement d'un deuxième élément auxiliaire d'assemblage (5) dans le trou traversant (7) dans le deuxième composant (3) de sorte qu'une section de retenue (16) du deuxième élément auxiliaire d'assemblage (5) est reliée de manière par friction et/ou complémentaire à la paroi du trou, dans lequel le deuxième élément auxiliaire d'assemblage (5) comprend en outre la section de réception de fixation (17),
d) positionnement et alignement du premier composant (2) par rapport au deuxième composant (3), et
e) réunion de la section de fixation (13) et de la section de réception de fixation (17) de sorte qu'elles s'engagent de manière par friction et/ou complémentaire l'une dans l'autre,
dans lequel avant l'emmanchement de l'élément auxiliaire d'assemblage respectif (4, 5) dans le premier composant (2) et/ou le deuxième composant (3), une empreinte périphérique est produite de sorte que le trou traversant respectif (6, 7) est élargi dans au moins une région de bord et la section de retenue (12, 16) de l'élément auxiliaire d'assemblage (4, 5) est emmanchée dans l'empreinte et après l'emmanchement forme une contre-dépouille (14, 15, 19, 20) au niveau de l'empreinte (8, 9, 10, 11).
